# EUROPÄISCHE PATENTSCHRIFT

(11) **EP 1 620 220 B1**
(45) Veröffentlichungstag und Bekanntmachung des Hinweises auf die Patenterteilung: **30.05.2007**
(21) Anmeldenummer: 04719987.2
(22) Anmeldetag: 12.03.2004
(51) Int. Cl.: B23D 31/00

(54) **VERFAHREN UND VORRICHTUNG ZUM BRUCHTRENNEN VON LAGERDECKELN**
METHOD AND DEVICE FOR BREAKING SEPARATION OF BEARING CAPS
PROCEDE ET DISPOSITIF POUR SEPARER PAR RUPTURE DES CHAPEAUX DE PALIER

(30) Priorität: 07.05.2003 DE 10320372
(43) Veröffentlichungstag der Anmeldung: 01.02.2006
(73) Patentinhaber: Alfing Kessler Sondermaschinen GmbH, 73433 Aalen (DE)
(72) Erfinder: SMOLAREK, Andreas, 73434 Aalen (DE)
(74) Vertreter: HOFFMANN EITLE
(86) Internationale Anmeldenummer: PCT/EP2004/002622
(87) Internationale Veröffentlichungsnummer: WO 2004/098823

(56) Entgegenhaltungen:
- EP-A- 0 396 797
- EP-A- 0 568 119
- EP-A- 1 002 609
- WO-A-00/64616
- DE-A- 19 704 131
- US-A- 5 503 317
- US-A1- 2002 104 864

## Beschreibung

### Technisches Gebiet

Die vorliegende Erfindung betrifft ein Verfahren sowie eine Vorrichtung zum Bruchtrennen mindestens eines Lagerdeckels vom jeweiligen Lagerstuhl in Lageranordnungen von Maschinengehäusen mit fluchtend angeordneten Lagerbohrungen, insbesondere Kurbelgehäusen von Hubkolbenmaschinen, gemäß dem Oberbegriff der Ansprüche 1 und 2. Ein derartiges Verfahren, sowie eine derartige Vorrichtung sind aus dem Dokument EP-A-1002609 bekannt.

### Stand der Technik

Bei Verfahren und Vorrichtungen der bekannten Art wird meist ein aus zwei Spreizdornhälften bestehender Spreizdorn in eine oder auch mehrere Lagerbohrungen eingeführt und die Bruchtrennkraft für das Abtrennen des Lagerdeckels vom Lagerstuhl durch kraftbetätigtes Auseinanderspreizen der beiden Spreizdornhälften erzeugt.

Dieses Auseinanderspreizen wird meist durch mechanisches oder hydraulisches Eintreiben eines Sprengkeiles (vgl. beispielsweise US-PS 4 684 267 bzw. Figur 1 der DE 44 13 255) oder durch Anordnung einer hydraulisch beaufschlagten Spreizeinrichtung zwischen den Spreizdornhälften erzeugt. Darüber hinaus werden auch Spreizeinrichtungen in Form von Kniehebelanordnungen eingesetzt (vgl. beispielsweise DE 199 18 067).

Bekannt ist es ferner, den Lagerstuhl auf einer stationären Unterlage festzuspannen und den Lagerdeckel durch Einleiten einer Zugkraft kontrolliert "abzureißen" (vgl. Figur 2 der DE 44 13 255). Zu diesem Zweck wird in der Lagerbohrung im Bereich des Lagerdeckels eine Zugbolzenhälfte angeordnet und diese zu beiden Seiten des Lagerdeckels an Zuglaschen angekoppelt, welche mit einer hydraulischen Zugeinrichtung verbunden sind, die die für das "Abreißen" des Lagerdeckels notwendige Zugkraft erzeugt.

Beim Bruchtrennen besteht generell das Problem der sogenannten Biegeverformung. Diese Verformungserscheinungen sind darauf zurückzuführen, dass beim Bruchtrennvorgang der Bruch über die gesamte Bruchtrennfläche nicht absolut zeitgleich realisiert werden kann. Vielmehr beginnt der Bruch an einer Stelle der Bruchtrennfläche und pflanzt sich mit zeitlicher Verzögerung (im Millisekundenbereich) über die gesamte Bruchtrennfläche fort. Dabei biegt sich der bereits abgetrennte Teil gegenüber dem noch nicht getrennten Teil auf, so dass die Bruchtrennfläche nach erfolgten Bruch nicht mehr präzise aufeinander passen. Dieser Effekt tritt in besonders starker Weise beim Bruchtrennen von Lagerbohrungen oder Lagerhülsen auf, bei denen die Bruchtrennfläche von zwei im Abstand voneinander angeordneten Flächenabschnitten gebildet wird. Werkstücke mit derartigen Verformungserscheinungen entsprechen nicht den im Lager- bzw. Motorenbau vorgeschriebenen Qualitätsanforderungen und sind deshalb unbrauchbar.

Biegeverformungen dieser Art wird im Stand der Technik dadurch entgegengewirkt, dass die zu trennenden Teile mit einer bestimmten Vorspannkraft nachgiebig aufeinandergepresst werden. Diese Vorspannkraft muss jedoch beim Bruchtrennvorgang überwunden werden, da sie der Bruchtrennkraft entgegenwirkt. Um die Biegeverformung beim Bruchtrennen von Lageranordnungen auf ein wirtschaftliches Maß zu reduzieren, muss in der Praxis mit relativ hohen Vorspannkräften und in deren Folge auch mit sehr hohen Bruchtrennkräften gearbeitet werden.

Ferner offenbart die EP 0 396 797 ein Verfahren und eine Vorrichtung zum Bruchtrennen von Pleueln, bei denen in der Symmetrieachse des Pleuels durch eine bewegte Schlagmasse ein Stoß ausgeübt wird.

### Darstellung der Erfindung

Aufgabe der vorliegenden Erfindung ist es, ein Verfahren und Vorrichtung zum Bruchtrennen von Lageranordnungen bereitzustellen, die verbesserte Eigenschaften der Bruchfläche ermöglichen.

Diese Aufgabe wird erfindungsgemäß durch ein Verfahren und eine Vorrichtung zum Bruchtrennen von Lageranordnungen mit den Merkmalen der unabhängigen Ansprüche 1 und 2 gelöst. Vorteilhafte Weiterbildungen sind in den abhängigen Ansprüchen angegeben.

Der vorliegenden Erfindung liegt der Gedanke zugrunde, die Eigenschaften der Bruchflächen beim Bruchtrennen dadurch zu verbessern, dass die während des Bruchtrennens auftretenden Biegeverformungen so weit wie möglich vermindert werden. Zu diesem Zweck wird erfindungsgemäß unter Beibehaltung des bewährten, zwei auseinanderbewegbare Spreizdornhälften aufweisenden Spreizdornsystems ein vollkommen neuer Weg gewählt. Anstelle der Fixierung des jeweiligen Lagerdeckels durch eine Vorspannkraft wird die Fixierung durch ein spezielles Einspannsystem vorgenommen. Dementsprechend wird der Lagerdeckel erfindungsgemäß verdrehfest, jedoch in Bruchtrennrichtung in Grenzen frei verschiebbar zwischen der jeweils zugeordneten Spreizdornhälfte und einer Anschlageinrichtung eingespannt.

Dieses Einspannsystem besteht im Prinzip aus der dem Lagerdeckel zugeordneten Spreizdornhälfte und einer Anschlageinrichtung, zwischen denen der Lagerdeckel unverschiebbar fixiert wird. Das Wesen der Erfindung besteht nun darin, diese aus der Spreizdornhälfte, dem Lagerdeckel und der Anschlageinrichtung gebildete Einheit derart zu lagern, dass sich der Lagerdeckel zwar nicht verdrehen, jedoch in Bruchtrennrichtung in Grenzen frei verschieben kann. Damit wird der Einsatz von Vorspannkräften, die durch die jeweilige Bruchtrennkraft überwunden werden müssen, überflüssig. Infolgedessen kann auch mit relativ geringen Bruchtrennkräften gearbeitet werden, was eine einfache und relativ leichte Konstruktion der erfindungsgemäßen Vorrichtung ermöglicht.

Vorrichtungen, die nach dem oben beschriebenen Prinzip arbeiten, können grundsätzlich in der verschiedensten Weise ausgestaltet sein. Eine technisch besonders einfach aufgebaute und dennoch ein besonders sicheres und wirkungsvolles Einspannen ermöglichende Vorrichtung wird jedoch dadurch erreicht, dass mindestens zwei zu beiden Seiten des jeweiligen Lagerdeckels an eine dem Lagerdeckel zugeordnete Spreizdornhälfte ankoppelbare Greifeinrichtungen vorgesehen sind, und der jeweilige Lagerdeckel über eine mit den Greifeinrichtungen fest verbundene Anschlageinrichtung zwischen der zugeordneten Spreizdornhälfte und der Anschlageinrichtung derart einspannbar ist, dass eine aus der zugeordneten Spreizdornhälfte mit den Greifeinrichtungen sowie der Anschlageinrichtung und dem eingespannten Lagerdeckel gebildete Einheit in Bruchtrennrichtung in Grenzen frei verschiebbar, jedoch verdrehfest gelagert ist. Hierdurch wird eine Verdrehung des jeweiligen Lagerdeckels gegenüber dem Lagerstuhl während des Bruchtrennens vermieden, so dass Biegeverformungen weitgehend ausgeschlossen sind.

Auf diese Weise lassen sich die eingangs beschriebenen Nachteile des Standes der Technik beseitigen und die Eigenschaften der Bruchfläche deutlich verbessern. Dabei ist von besonderem Vorteil, dass die erfindungsgemäße Vorrichtung keine äußeren Kräfte auf die zu trennenden Bauteile aufbringt, die dem Bruchtrennvorgang entgegenwirken. Hierdurch ergeben sich geringe aufzubringende Bruchkräfte, was de Bruchvorgang erleichtert und die Konstruktion der Vorrichtung weiter vereinfacht.

Grundsätzlich können die Greifeinrichtungen auf beliebige Weise ausgebildet und an die zugeordnete Spreizdornhälfte angekoppelt werden. Vorteilhaft ist es jedoch, wenn der Spreizdorn, insbesondere die zugeordnete Spreizdornhälfte, mindestens eine auf die Greifeinrichtungen abgestimmte Aussparung bzw. einen Vorsprung aufweist, in die die Greifeinrichtungen eingreifen. Hierdurch ergibt sich auf einfache Weise ein sicherer Formschluss, der dazu beiträgt, die gewünschte verdrehfeste Lagerung zu gewährleisten.

Insbesondere bei starren Greifeinrichtungen ist es gemäß einer Weiterbildung der vorliegenden Erfindung bevorzugt, die jeweilige Spreizdornhälfte an ihrem Umfang auf einander gegenüberliegenden Seiten mit tangential verlaufenden Einführschlitzen auszustatten, mittels derer die jeweilige Greifeinrichtung über die Spreizdornhälfte geschoben werden kann. Dabei ist es besonders bevorzugt, dass die Einführschlitze mit der mindestens einen Aussparung in Verbindung stehen, so dass die Greifeinrichtungen über die Einführschlitze zügig und sicher mit der mindestens einen Aussparung in Eingriff gebracht werden können.

Vorteilhaft ist es bei einer derartigen Konstruktion, wenn die mindestens eine Aussparung axial neben den Einführschlitzen angeordnet sind und in diese unmittelbar übergehen. Bei einer derartigen Konstruktion können die Greifeinrichtungen durch die Einführschlitze über die jeweilige Spreizdornhälfte geschoben und das Ankoppeln durch einfaches Verschieben der Spreizdornhälfte in Achsrichtung hergestellt werden. Durch die Verschiebung in Achsrichtung können die Greifeinrichtungen nämlich in die axial neben den Einführschlitzen angeordneten Aussparungen eingreifen, so dass eine formschlüssige Verriegelung der Greifeinrichtungen mit der zugeordneten Spreizdornhälfte erreicht wird.

Eine technisch besonders einfache und statisch starre Anordnung wird erzielt, wenn die Greifeinrichtungen durch Zangen gebildet sind, die bevorzugt jeweils feste, d.h. nicht gegeneinander bewegliche Backen aufweisen, die im Bereich ihrer Enden aufeinanderzugerichtete Eingriffselemente besitzen, die in die mindestens eine Aussparung in der jeweiligen Spreizdornhälfte eingreifen.

Die Anschlageinrichtung wiederum kann ebenfalls in verschiedenster Weise ausgestaltet sein. Eine besonders einfache und wirkungsvolle Anordnung ergibt sich, wenn die Anschlageinrichtung mindestens einen kraftbetätigten Anschlagbolzen aufweist. Hierdurch kann ein sicheres Verspannen der Anschlageinrichtung mit dem anzutrennenden Lagerdeckel und der zugeordneten Spreizdornhälfte erzielt werden. Dabei ist es bevorzugt, dass mindestens zwei voneinander beabstandete Anschlagbolzen (32, 34) vorgesehen sind, die besonders bevorzugt auf der der zugeordneten Spreizdornhälfte gegenüberliegenden Seite auf den Lagerdeckel einwirken. Auf diese Weise ergibt sich eine in sich verspannte Einheit aus Anschlageinrichtung, anzutrennendem Lagerdeckel und zugeordneter Spreizdornhälfte, ohne dass durch das Verspannen Kräfte in die Lageranordnung eingeleitet würden, die das spätere Buchtrennen behindern. Gleichzeitig lassen sich die Anschlagbolzen einfach und wirtschaftlich realisieren, beispielsweise durch Hydraulikzylinder oder dergleichen.

### Kurze Beschreibung der Zeichnungen

- Fig. 1: zeigt eine schematische Perspektivansicht einer bevorzugten. Ausführungsform der erfindungsgemäßen Vorrichtung zum Bruchtrennen;
- Fig. 2 bis Fig. 6: zeigen jeweils schematisch einzelne Schritte einer bevorzugten Ausführungsform des erfindungsgemäßen Verfahrens zum Bruchtrennen unter Einsatz der in Fig. 1 gezeigten Vorrichtung.

### Ausführliche Beschreibung bevorzugter Ausführungsformen

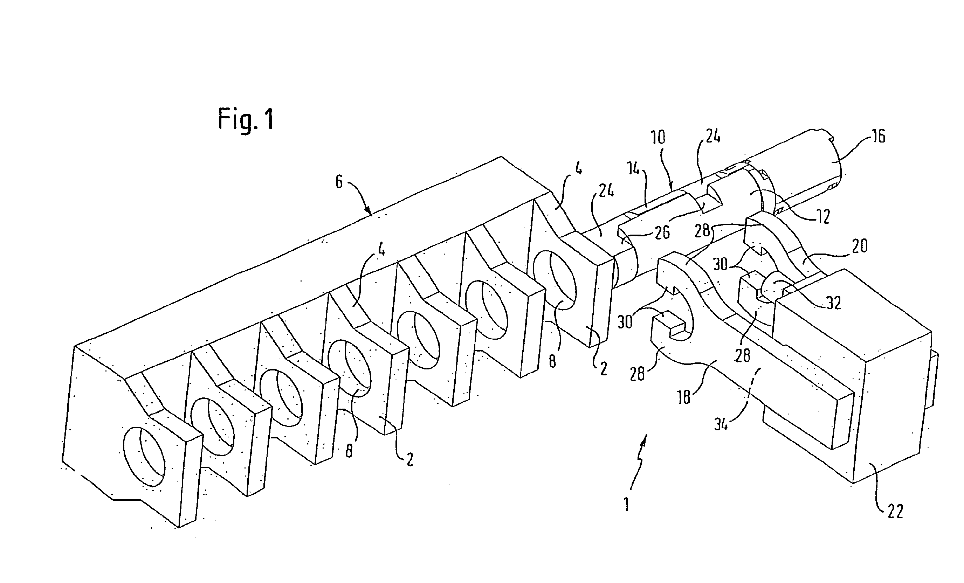

Bevorzugte Ausführungsformen der vorliegenden Erfindung werden nachfolgend ausführlich unter Bezugnahme auf die Figuren 1 bis 6 beschrieben. Dabei bezeichnen gleiche Bezugszeichen in den Figuren jeweils gleiche oder identische Bauteile.

Fig. 1 zeigt schematisch eine Perspektivansicht einer bevorzugten Ausführungsform einer Vorrichtung 1 zum Bruchtrennen gemäß der vorliegenden Erfindung. Wie in Fig. 1 zu erkennen ist, dient die Vorrichtung 1 in der vorliegenden Ausführungsform zur Bruchtrennbearbeitung eines Kurbelgehäuses 6, wie es beispielsweise bei Verbrennungsmotoren zum Einsatz kommt. Das Kurbelgehäuse 6 besitzt eine Reihe fluchtend angeordneter Lagerbohrungen 8, die jeweils durch einen Lagerstuhl 4 und einen Lagerdeckel 2 umschlossen sind, die im Wege des Bruchtrennens voneinander getrennt werden sollen. Dabei kann das Kurbelgehäuse 6 während des Bruchtrennens in geeigneter Weise gelagert sein. Es ist jedoch zu beachten, dass die vorliegende Erfindung nicht auf den gezeigten Anwendungsfall beschränkt ist, sondern auch auf andere Lageranordnungen oder dergleichen anwendbar ist.

Die in Fig. 1 gezeigte Vorrichtung zum Bruchtrennen umfasst zunächst einen Spreizdorn 10, der zwei Spreizdornhälften 12, 14 besitzt und zumindest in eine der fluchtend angeordneten Lagerbohrungen 8 einführbar ist. Zwischen den Spreizdornhälften 12, 14 ist eine Aufspreizeinrichtung 16 zum Auseinanderbewegen der Spreizdornhälften 12, 14 angeordnet. Die Aufspreizeinrichtung 16 kann beispielsweise durch einen Keil oder eine hydraulische Einrichtung gebildet sein, die in der Lage ist, eine ausreichende Spreizkraft auf die Spreizdornhälften 12, 14 aufzubringen.

Ferner umfasst die Bruchtrennvorrichtung 1 zwei Greifeinrichtungen in Form von Zangen 18, 20, die zu beiden Seiten des jeweiligen Lagerdeckels 2 an die dem Lagerdeckel 2 zugeordnete Spreizdornhälfte 12 ankoppelbar sind. Die Zangen 18 sind fest mit einer Anschlageinrichtung 22 verbunden, die in Bruchtrennrichtung, das heißt in eine Richtung im Wesentlichen senkrecht zur Achse der Lagerbohrungen 8, in Grenzen frei verschiebbar, jedoch verdreht fest gelagert ist. Eine derartige Lagerung kann beispielsweise nach Art einer Schiebehülse oder dergleichen realisiert sein.

Die vom jeweiligen Lagerdeckel 2 abgewandte Spreizdornhälfte 14 besitzt in der vorliegenden Ausführungsform zwei Aussparungen 24, so dass die dem jeweiligen Lagerdeckel 2 zugewandte Spreizdornhälfte 12 vorsprungartig über die andere Spreizdornhälfte 14 hervorsteht. Auf diese Weise wird ermöglicht, dass die Zangen 18, 20 formschlüssig an der dem jeweiligen Lagerdeckel 2 zugeordneten Spreizdornhälfte 12 eingreifen könnten.

Weiterhin weist die dem jeweiligen Lagerdeckel 2 zugeordnete Spreizdornhälfte 12 an ihrem Umfang auf einander gegenüberliegenden Seiten tangential verlaufende Einführschlitze 26 für die Zangen 18, 20 auf, die jeweils mit den Aussparungen 24 in Verbindung stehen. Genauer gesagt liegen die Aussparungen 24 in Achsrichtung des Spreizdornes 10 betrachtet jeweils axial neben den Einfüllschlitzen 26 und gehen in diese über.

Die Zangen 18, 20 sind in der vorliegenden Ausführungsform derart gebildet, dass sie eine feste bzw. starre Geometrie besitzen. Dabei weisen die Zangen 18, 20 jeweils zwei feste Backen 28 auf, die im Wesentlichen u-förmig angeordnet sind und an ihrem inneren Umfang jeweils ein zahnartiges Eingriffselement 30 besitzen, die bei jeder Zange 18, 20 aufeinander zu gerichtet sind.

Wie in Fig. 1 zu erkennen ist, entspricht die Dicke der Zangen 18, 20 im Wesentlichen der Breite der Einführschlitze 26, so dass die Zangen 18, 20 derart auf den Spreizdorn 10 führbar sind, dass die Eingriffselemente 30 im Bereich der Aussparungen 24 formschlüssig zum Liegen kommen und den zugehörigen Vorsprung der Spreizdornhälfte 12 hintergreifen können.

Die Anschlageinrichtung 22 weist in der vorliegenden Ausführungsform zwei kraftbetätigte Anschlagbolzen 32, 34 auf, wobei der Anschlagbolzen 34 in Fig. 1 durch die Zange 18 verdeckt ist. Die Anschlagbolzen 32, 34 sind voneinander beabstandet und zwischen den Zangen 18, 20 derart vorgesehen, dass sie dem jeweiligen Lagerdeckel 2 zugewandt sind. Dabei ist es im Hinblick auf eine gleichmäßige Belastung bevorzugt, dass die Anschlagbolzen 32, 34 etwa mittig zwischen den Zangen 18, 20 liegen und sich im Wesentlichen parallel zu diesen erstrecken. Bei den kraftbetätigten Anschlagbolzen 32, 34 kann es sich beispielsweise um ausfahrbare Kolben von Hydraulik- oder Pneumatikzylindern handeln. Es ist jedoch selbstverständlich, dass auch andere geeignete Anschlagelemente im Rahmen der vorliegenden Erfindung zum Einsatz kommen können. Auch ist es denkbar, dass die Anschlagbolzen unverschieblich und die Zangen kraftbetätigt sind.

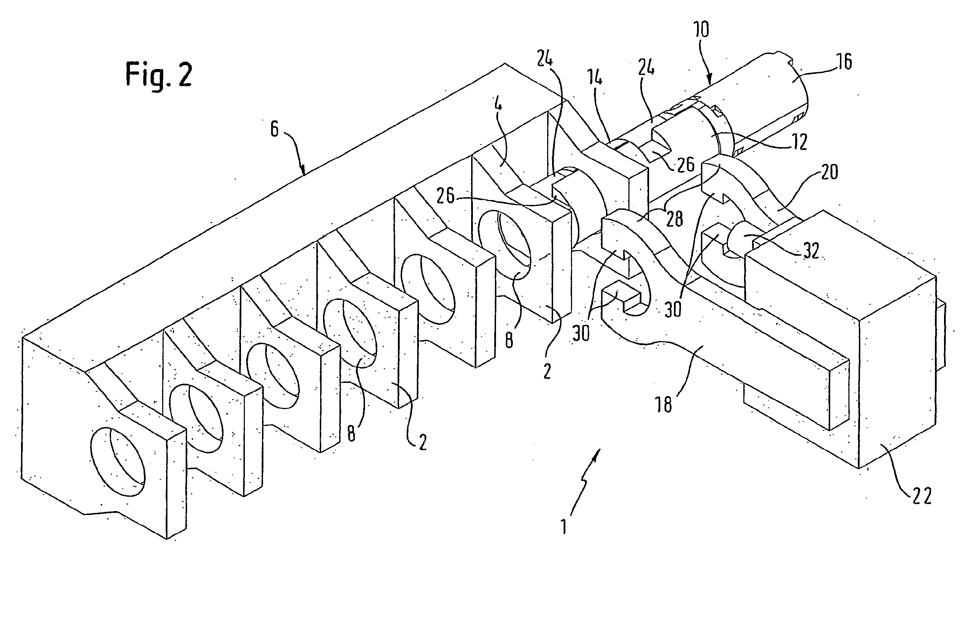

Der Betrieb der in Fig. 1 gezeigten Bruchtrennvorrichtung 1 wird nachfolgend beispielhaft anhand der Figuren 2 bis 6 beschrieben, die jeweils schematisch einzelne Schritte einer bevorzugten Ausführungsform des erfindungsgemäßen Verfahrens zum Bruchtrennen unter Einsatz der in Fig. 1 gezeigten Vorrichtung veranschaulichen.

Ausgehend von dem in Fig. 1 gezeigten Zustand wird zunächst der Spreizdorn 10 im entspannten Zustand, das heißt ohne dass die Aufspreizeinrichtung 16 eine wesentliche Spreizkraft auf die Spreizdornhälften 12 und 14 aufbringt, in die erste Lagerbohrung 8 derart eingeführt, dass zumindest der erste Einführschlitz 26 zwischen dem ersten und zweiten Lagerdeckel 2 zum Liegen kommt (Fig. 2, als erster Lagerdeckel wird dabei der in den Figuren auf der rechte Seite liegende Lagerdeckel bezeichnet). Dabei werden die Einführschlitze 26 bevorzugt in eine derartige Position gefahren, dass sie mit den Zangen 18, 20 der Anschlageinrichtung 22 im Wesentlichen fluchten.

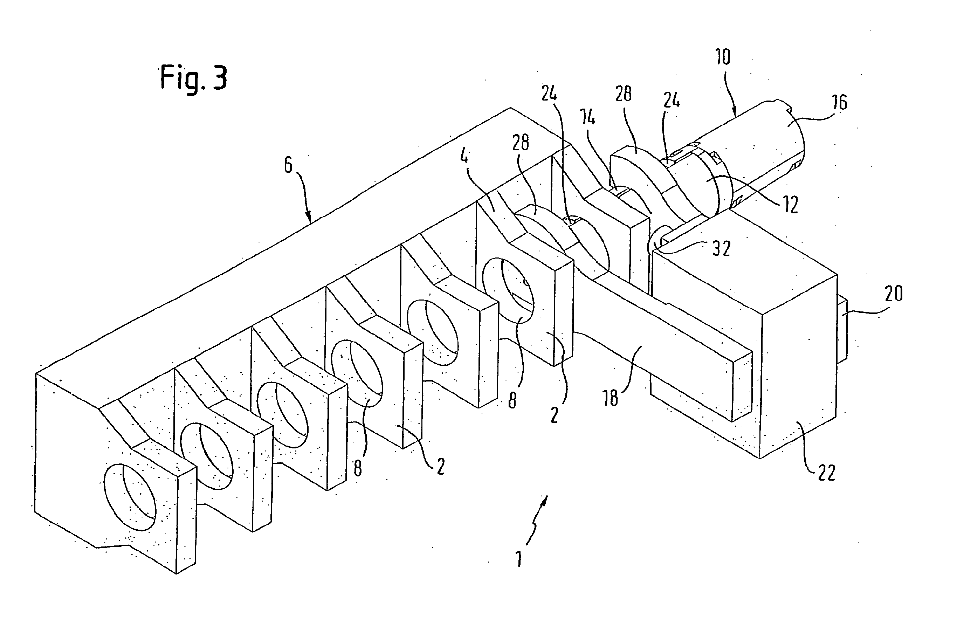

Wie in Fig. 3 zu erkennen ist, wird nun die aus den Zangen 18, 20 und der Anschlageinrichtung 22 gebildete, fest verbundene Einheit derart auf den Spreizdorn 10 und das Kurbelgehäuse 6 zugefahren, dass die Zangen 18, 20 mit ihren Backen 28 und insbesondere ihren zahnartigen Eingriffselementen 30 in die Einführschlitze 26 eintauchen. Dabei werden die Zangen 18, 20 soweit an den Spreizdorn 10 herangefahren, dass die zahnartigen Eingriffselemente 30 axial neben den Aussparungen 24 zum Liegen kommen.

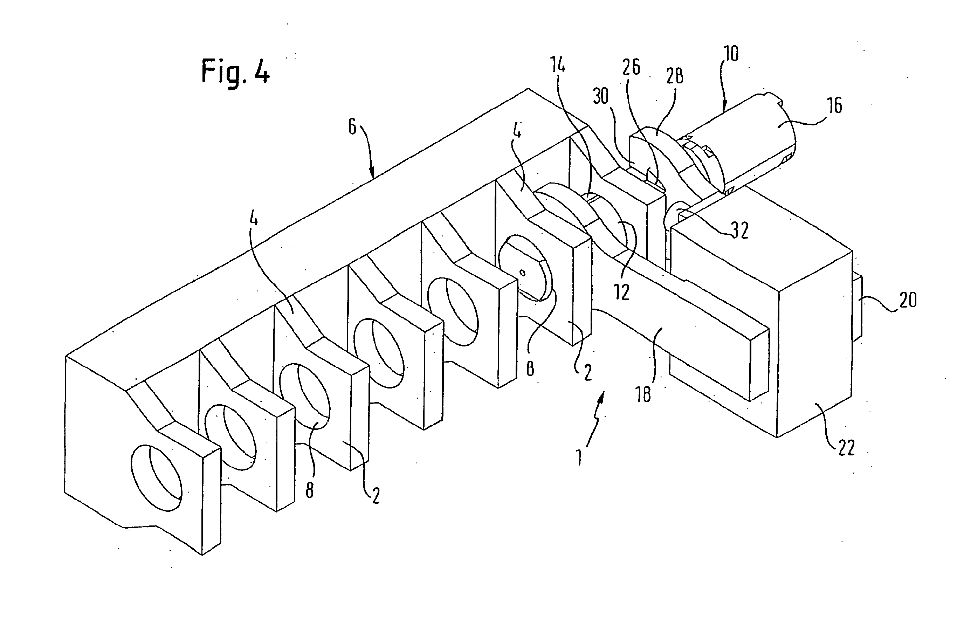

Als nächstes wird, wie in Fig. 4 gezeigt ist, der Spreizdorn 10 weiter in die Lagerbohrung 8 eingeführt. Dabei gelangen die zahnartigen Eingriffselemente 30 der Zangen 18, 20 in formschlüssigen Eingriff mit den Aussparungen 24 des Spreizdorns 10 und hintergreifen somit die dem abzutrennenden Lagerstuhl 2 zugewandte Spreizhülse 12. In anderen Worten ist nun eine formschlüssige Kraftübertragung zwischen der dem abzutrennenden Lagerdeckel 2 zugewandten Spreizhülse 12 und den Zangen 18, 20 möglich.

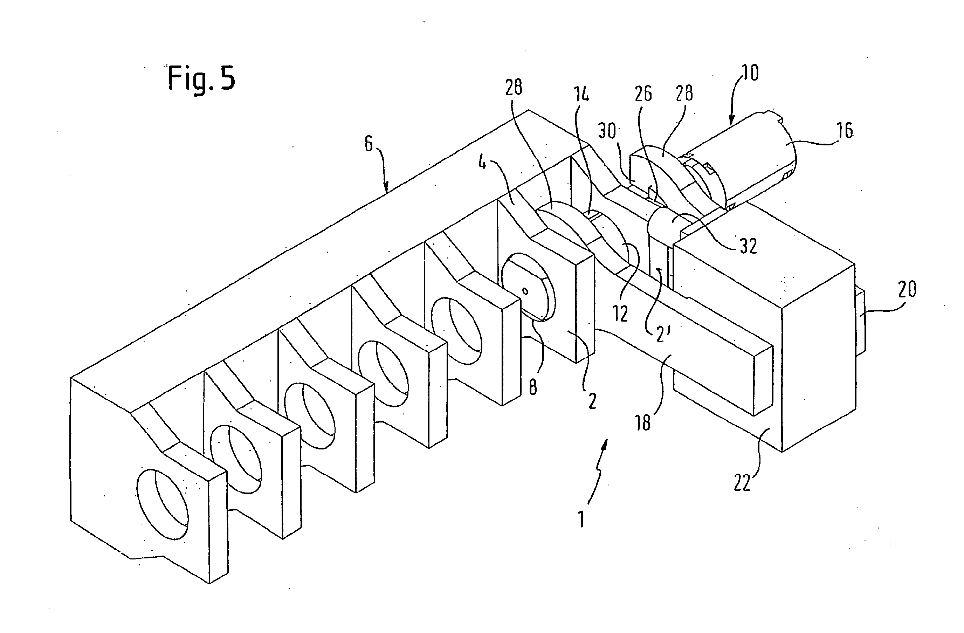

Danach werden die kraftbetätigten Anschlagbolzen 32, 34 derart ausgefahren, dass sie mit der zugewandten Oberfläche 2' des abzutrennenden Lagerdeckels 2 in Anlage kommen und diese mit einer Kraft beaufschlagen (Fig. 5). Hierdurch wird eine Vorspannkraft erzeugt, welche die Anschlageinrichtung 22, die Zangen 18, 20, die dem abzutrennenden Lagerdeckel 2 zugewandte Spreizhülse 12 sowie den abzutrennenden Lagerdeckel 2 selbst fest zu einer Einheit verspannt. Auf diese Weise wird zusammen mit der drehfesten, jedoch in Grenzen frei verschiebbaren Lagerung der Anschlageinrichtung 22 erreicht, dass eine Verdrehung bzw. Biegeformung des abzutrennenden Lagerdeckels 2 während des Bruchtrennvorganges vermindert bzw. weitgehend beseitigt ist. Auf diese Weise kann eine Bruchfläche mit deutlich verbesserter Qualität und Oberflächenstruktur erzielt werden.

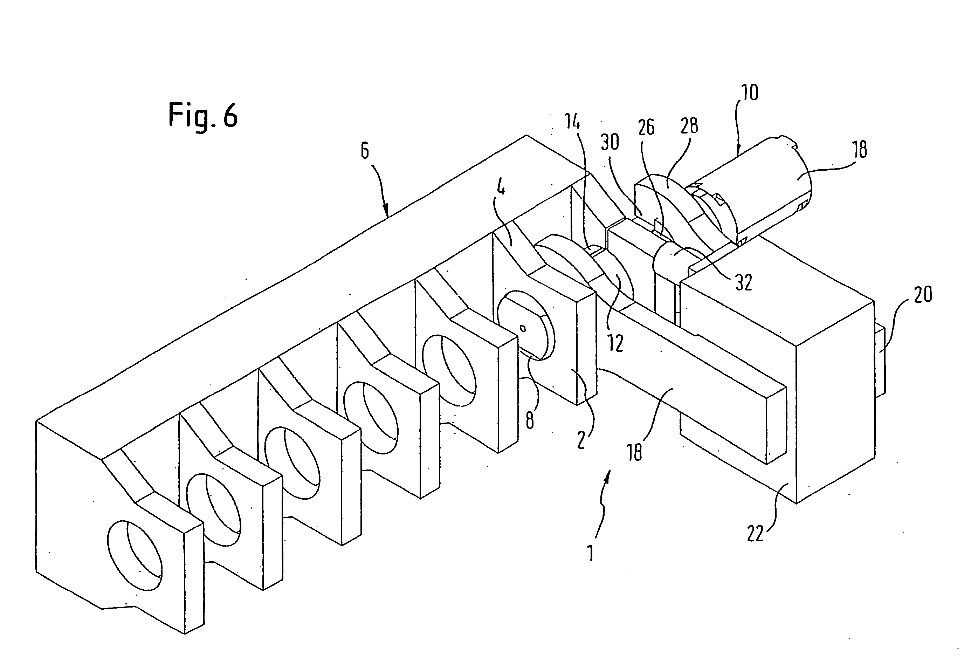

Schließlich wird, wie in Fig. 6 zu erkennen ist, der eigentliche Bruchtrennvorgang durchgeführt. Zu diesem Zweck werden die Spreizdornhälften 12, 14 mittels der Aufspreizeinrichtung 16 soweit auseinander bewegt, bis zwischen dem Lagerdeckel 2 und dem jeweiligen Lagerstuhl 4 ein Trennbruch eintritt. Dabei ist es im Rahmen der vorliegenden Erfindung nicht erforderlich, dass über die Anschlageinrichtung 22 Zugkräfte auf dem abzutrennenden Lagerdeckel 2 aufgebra cht werden, da die Anschlageinrichtung 22 mit den Zangen 18, 20 und den Anschlagbolzen 32, 34 in der vorliegenden Ausführungsform lediglich dazu dient, eine Verdrehung des abzutrennenden Lagerdeckels 2 zu..verhindern, nicht jedoch dessen Verschiebung in Bruchtrennrichtung zu behindern oder zu unterstützen.

Nach Abschluss des Bruchtrennvorganges kann die Einspannung des abgetrennten Lagerdeckels 2 durch Zurückfahren der Anschlagbolzen 32, 34 gelöst werden, so dass der abgetrennte Lagerdeckel 2 entnommen und die Zangen 18, 20 aus dem Eingriff mit dem Spreizdorn 10 durch Zurückziehen desselben und anschließendes Zurückziehen der Zangen 18, 20 gelöst werden können. Sodann kann der oben beschriebene Vorgang bei dem nächsten Lagerdeckel 2 entsprechend durchgeführt werden.

Obgleich das oben beschriebene Ausführungsbeispiel der vorliegenden Erfindung das Bruchtrennen eines einzelnen Lagerdeckels 2 betrifft, ist es im Rahmen der vorliegenden Erfindung selbstverständlich möglich, während eines Bruchtrennvorganges auch mehrere Lagerdeckel 2 vom jeweiligen Lagerstuhl 4 abzutrennen. Dazu kann es sinnvoll sein, beispielsweise mehrere Anschlageinrichtungen 22 mit entsprechenden Zangen vorzusehen oder eine einzelne Anschlageinrichtung 22 mit mehreren Zangen und entsprechenden Anschlagbolzen auszustatten.

## Patentansprüche

1. Verfahren zum Bruchtrennen mindestens eines Lagerdeckels (2) vom jeweiligen Lagerstuhl (4) in Lageranordnungen (6) von Maschinengehäusen mit fluchtend angeordneten Lagerbohrungen (8), insbesondere Kurbelgehäusen von Hubkolbenmaschinen,
bei welchem Verfahren ein zwei Spreizdornhälften (12, 14) aufweisender Spreizdorn (10) in mindestens eine Lagerbohrung (8) eingeführt wird und die Spreizdornhälften (12, 14) zur Aufbringung der Bruchtrennkraft zwischen Lagerstuhl (4) und Lagerdeckel (2) durch eine zwischen den Spreizdornhälften (12, 14) wirksame Aufspreizeinrichtung (16) auseinander bewegt werden,
**dadurch gekennzeichnet, dass** der Lagerdeckel (2) verdrehfest, jedoch in Bruchtrennrichtung in Grenzen frei verschiebbar zwischen der jeweils zugeordneten Spreizdornhälfte (12) und einer Anschlageinrichtung (22) eingespannt wird.

2. Vorrichtung (1) zum Bruchtrennen mindestens eines Lagerdeckels (2) vom jeweiligen Lagerstuhl (4) in Lageranordnungen (6) von Maschinengehäusen mit fluchtend angeordneten Lagerbohrungen (8), insbesondere Kurbelgehäusen von Hubkolbenmaschinen, mit
einem in mindestens eine der Lagerbohrungen (8) einführbaren, zwei Spreizdornhälften (12, 14) aufweisenden Spreizdorn (10),
einer zwischen den Spreizdornhälften (12, 14) wirksamen Aufspreizeinrichtung (16) zum Auseinanderbewegen der Spreizdornhälften (12, 14),
**dadurch gekennzeichnet, dass**
mindestens zwei Greifeinrichtungen (18, 20) vorgesehen sind, welche an die dem mindestens einen Lagerdeckel zugeordnete Spreizdornhälfte (12) ankoppelbar ist, und
eine Anschlageinrichtung (22) vorgesehen ist, die mit den mindestens zwei Greifeinrichtungen (18, 20) fest verbunden ist, wobei
der mindestens eine Lagerdeckel (2) zwischen der zugeordneten Spreizdornhälfte (12) und der Anschlageinrichtung (22) derart einspannbar ist, dass
eine aus der zugeordneten Spreizdornhälfte (12) mit den Greifeinrichtungen (18, 20) sowie der Anschlageinrichtung (22) und dem eingespannten Lagerdeckel (2) gebildete Einheit in Bruchtrennrichtung in Grenzen frei verschiebbar, jedoch verdrehfest gelagert ist.

3. Vorrichtung nach Anspruch 2, **dadurch gekennzeichnet, dass** der Spreizdorn (10), insbesondere die dem Lagerdeckel (2) zugeordnete Spreizdornhälfte (12), mindestens eine Aussparung (24) und/oder mindestens einen Vorsprung aufweist, in die die Greifeinrichtungen (18, 20) eingreifen.

4. Vorrichtung nach Anspruch 2 oder 3, **dadurch gekennzeichnet, dass** die dem Lagerdeckel (2) zugeordnete Spreizdornhälfte (12) an ihrem Umfang auf einander gegenüberliegenden Seiten tangential verlaufende Einführschlitze (26) für die Greifeinrichtungen (18, 20) aufweist, die bevorzugt mit der mindestens einen Aussparung (24) in Verbindung stehen.

5. Vorrichtung nach einem der Ansprüche 2 bis 4, **dadurch gekennzeichnet, dass** die mindestens eine Aussparung (24) - in Achsrichtung des Spreizdornes (10) betrachtet - jeweils axial neben den Einführschlitzen (26) angeordnet sind und in diese übergehen.

6. Vorrichtung nach einem der Ansprüche 2 bis 5, **dadurch gekennzeichnet, dass** die Greifeinrichtungen (18, 20) durch Zangen gebildet sind, die bevorzugt jeweils feste Backen (28) aufweisen, die an ihren Enden aufeinanderzugerichtete Eingriffselemente (30) besitzen.

7. Vorrichtung nach Anspruch 6, **dadurch gekennzeichnet, dass** die Eingriffselemente (30) in die mindestens eine Aussparung (24) in der dem Lagerdeckel (2) zugeordneten Spreizdornhälfte (12) eingreifen bzw. den mindestens einen Vorsprung hintergreifen.

8. Vorrichtung nach einem der Ansprüche 2 bis 7, **dadurch gekennzeichnet, dass** die mit den Greifeinrichtungen (18, 20) verbundene Anschlageinrichtung (22) mindestens einen kraftbetätigten Anschlagbolzen (32) aufweist.

9. Vorrichtung nach Anspruch 8, **dadurch gekennzeichnet, dass** mindestens zwei voneinander beabstandete Anschlagbolzen (32, 34) vorgesehen sind, die bevorzugt auf der der zugeordneten Spreizdornhälfte (12) gegenüberliegenden Seite auf den Lagerdeckel (2) einwirken.

## Claims

1. Method for fracture-separation of at least one bearing cap (2) from the respective bearing block (4) in bearing arrangements (6) of machine housings with bearing bores (8), arranged flush, in particular crankcases of reciprocating piston engines,
in which method an expanding mandrel (10), having two expanding mandrel halves (12, 14) is inserted into at least one bearing bore (8) and the expanding mandrel halves (12, 14) are moved apart to apply the fracture-separation force between the bearing block (4) and the bearing cap (2) by an expanding device (16) acting between the expanding mandrel halves (12, 14),
**characterised in that** the bearing cap (2) is clamped, fixed against rotation, but freely movable within limits between the expanding mandrel half (12) allocated in each case and a limit stop device (22) in the fracture-separating direction.

2. Device (1) for fracture-separation of at least one bearing cap (2) from the respective bearing block (4) in bearing arrangements (6) of machine housings with bearing bores (8), arranged flush, in particular crankcases of reciprocating piston engines, with
an expanding mandrel (10), which can be inserted into at least one of the bearing bores (8) and having two expanding mandrel halves (12, 14),
an expanding device (16) acting between the expanding mandrel halves (12, 14) to move apart the expanding mandrel halves (12, 14),
**characterised in that** at least two gripping devices (18, 20) are provided, which can be coupled to the expanding mandrel half (12) allocated to the at least one bearing cap and
a limit stop device (22) is provided, which is firmly connected to the at least two gripping devices (18, 20), wherein
the at least one bearing cap (2) can be clamped between the allocated expanding mandrel half (12) and the limit stop device (22) in such a way that
a unit formed from the allocated expanding mandrel half (12) with the gripping devices (18, 20) and the limit stop device (22) and the clamped bearing cap (2) is held as freely movable within limits in the fracture-separation direction, but fixed against rotation.

3. Device according to claim 2, **characterised in that** the expanding mandrel (10), in particular the expanding mandrel half (12) allocated to the bearing cap (2), has at least one recess (24) and/or at least one projection in which the gripping devices (18, 20) engage.

4. Device according to claim 2 or 3, **characterised in that** the expanding mandrel half (12) allocated to the bearing cap (2) has on its circumference on opposite sides tangentially running insertion slots (26) for the gripping devices (18, 20), which are preferably connected to the at least one recess (24).

5. Device according to one of claims 2 to 4, **characterised in that** the at least one recess (24) - looked at in the axial direction of the expanding mandrel (10) - is arranged in each case axially next to the insertion slots (26) and graduates into these.

6. Device according to one of claims 2 to 5, **characterised in that** the gripping devices (18, 20) are formed by pincers, which preferably in each case have fixed jaws (28), which have on their ends gripping elements (30) facing one another.

7. Device according to claim 6, **characterised in that** the gripping elements (30) engage in the at least one recess (24) in the expanding mandrel half (12) allocated to the bearing cap (2) or engage behind the at least one projection.

8. Device according to one of claims 2 to 7, **characterised in that** the limit stop device (22) connected to the gripping devices (18, 20) has at least one power-operated limit stop pin (32).

9. Device according to claim 8, **characterised in that** at least two limit stop pins (32, 34) at a distance from one another are provided, which preferably act on the bearing cap (2) on the side opposite the allocated expanding mandrel half (12)

## Revendications

1. Procédé pour séparer par rupture au moins un chapeau de palier (2) vis-à-vis du socle de palier respectif (4) dans des agencements de paliers (6) de carters de machines avec des alésages de paliers (8) agencés en alignement, en particulier des carters de vilebrequins dans des machines à pistons alternatifs,
procédé dans lequel un mandrin d'écartement (10) présentant deux moitiés de mandrin d'écartement (12, 14) est introduit dans au moins un alésage de palier (8), et les moitiés de mandrin d'écartement (12, 14) sont déplacées en éloignement l'une de l'autre, pour appliquer la force de séparation par rupture entre le socle de palier (4) et le chapeau de palier (2), par un dispositif d'écartement (16) agissant entre les moitiés de mandrin d'écartement (12, 14),
**caractérisé en ce que** le chapeau de palier (2) est serré fixe en rotation, mais librement mobile dans des limites dans la direction de séparation par rupture, entre la moitié de mandrin d'écartement (12) associée respective et un dispositif de butée (22).

2. Dispositif (1) pour séparer par rupture au moins un chapeau de palier (2) vis-à-vis du socle de palier respectif (4) dans des agencements de paliers (6) de carters de machines avec des alésages de paliers (8) agencé en alignement, en particulier des carters de vilebrequins dans des machines à pistons alternatifs, comprenant :
un mandrin d'écartement (10), présentant deux moitiés de mandrin d'écartement (12, 14), susceptible d'être introduit dans l'un au moins des alésages de palier (8),
un dispositif d'écartement (16), agissant entre les moitiés de mandrin d'écartement (12, 14), pour déplacer les, moitiés de mandrin d'écartement (12, 14) en éloignement l'une de l'autre,
**caractérisé en ce que** :
il est prévu au moins deux dispositifs de préhension (18, 20) adaptés pour être accouplés à la moitié de mandrin d'écartement (12) associée audit au moins un chapeau de palier, et
il est prévu un dispositif de butée (22) qui est solidement relié auxdits au moins deux dispositifs de préhension (18, 20), et
ledit au moins un chapeau de palier (2) est susceptible d'être serré entre la moitié de mandrin de serrage (12) associée et le dispositif de butée (22) de telle façon que
une unité formée de la moitié de mandrin d'écartement (12) associée avec les dispositifs de préhension (18, 20) ainsi que du dispositif de butée (22) et du chapeau de palier (2) serré, est montée librement mobile dans des limites dans la direction de séparation par rupture, mais fixe en rotation.

3. Dispositif selon la revendication 2, **caractérisé en ce que** le mandrin d'écartement (10), en particulier la moitié de mandrin d'écartement (12) associée au chapeau de palier (2), présente au moins une échancrure (24) et/ou au moins une saillie, dans laquelle s'engagent les dispositifs de préhension (18, 20).

4. Dispositif selon la revendication 2 au 3, **caractérisé en ce que** la moitié de mandrin d'écartement (12) associée au chapeau de palier (2) présente sur sa périphérie, sur des côtés mutuellement opposés, des fentes d'introduction (26) s'étendant tangentiellement pour les dispositifs de préhension (18, 20), lesquelles fentes d'introduction sont de préférence en liaison avec ladite au moins une échancrure (24).

5. Dispositif selon l'une des revendications 2 à 4, **caractérisé en ce que** ladite au moins une échancrure (24) - considérée en direction axiale du mandrin d'écartement (10) - est agencée respectivement axialement à côté des fentes d'introduction (26) et se transforme en celles-ci.

6. Dispositif selon l'une des revendications 2 à 5, **caractérisé en ce que** les dispositifs de préhension (18, 20) sont formés par des pinces qui comprennent de préférence des mâchoires (28) fixes respectives, qui possèdent à leurs extrémités des éléments d'engagement (30) dirigés les uns vers les autres.

7. Dispositif selon la revendication 6, **caractérisé en ce que** les éléments d'engagement (30) s'engagent dans ladite au moins une échancrure (24) dans la moitié de mandrin d'écartement (12) associée au chapeau de palier (2), ou engagent par l'arrière ladite au moins une saillie.

8. Dispositif selon l'une des revendications 2 à 7, **caractérisé en ce que** le dispositif de butée (22) relié aux dispositifs de préhension (18, 20) comprend au moins un goujon de butée (32) actionné par une force.

9. Dispositif selon la revendication 8, **caractérisé en ce qu'**il est prévu au moins deux goujons de butée (32, 34) écartés l'un de l'autre, qui agissent de préférence sur le chapeau de palier (2) sur le côté opposé à la moitié de mandrin d'écartement (12) associée.
